# EUROPÄISCHE PATENTSCHRIFT

(11) **EP 3 530 460 B1**
(45) Veröffentlichungstag und Bekanntmachung des Hinweises auf die Patenterteilung: **20.10.2021**
(21) Anmeldenummer: 19156474.9
(22) Anmeldetag: 11.02.2019
(51) Int. Cl.: B41F 23/04, B41J 11/00

(54) **AUSHÄRTEKAMMER FÜR DRUCKERZEUGNISSE**
CURING CHAMBER FOR PRINTED PRODUCTS
CHAMBRE DE DURCISSEMENT POUR PRODUITS IMPRIMÉS

(30) Priorität: 23.02.2018 CH 2232018
(43) Veröffentlichungstag der Anmeldung: 28.08.2019
(73) Patentinhaber: Hapa AG, 8604 Volketswil (CH)
(72) Erfinder: RRAHIMI, Migjen, 8623 Wetzikon (CH); HOWALD, Nicole, 8645 Jona (CH); THEILER, Matthias, 8600 Dübendorf (CH); HOLDENER, Marcel, 8625 Gossau ZH (CH); BRAUN, Stefan, 8617 Mönchaltorf (CH); COLOMBO, René, 8807 Freienbach (CH); SIMON, Sascha, 6027 Römerswil (CH)
(74) Vertreter: Troesch Scheidegger Werner AG

(56) Entgegenhaltungen:
- EP-A1- 3 168 861
- WO-A1-96/34700
- WO-A1-2011/122257
- DE-A1- 10 141 755
- US-A1- 2014 014 857

## Beschreibung

Die Erfindung betrifft eine Aushärtekammer zum Aushärten und Trocknen eines mit zumindest einem UV-härtenden Farbstoff bedruckten flachen Druckerzeugnisses nach Anspruch 1 sowie einen Drucker nach Anspruch 12 umfassend eine Aushärtekammer nach Anspruch 1. Des Weiteren umfasst die Erfindung ein Verfahren zum Bedrucken einer Druckbahn und Aushärten des Druckerzeugnisses nach Anspruch 20 mit einer entsprechenden Aushärtekammer.

Vorteilhafte Weiterbildungen der vorliegenden Erfindung sind Gegenstand der abhängigen Ansprüche.

### Technischer Hintergrund

Drucker für durchlaufende Druckbahnen, die mit UV-Tinte, bedruckt und anschliessend gehärtet werden sind aus dem Stand der Technik bekannt. Unter UV-Tinte wird im Folgenden eine Tinte verstanden die unter dem Einfluss von UV-Strahlen polymerisierbar, also (aus)härtbar ist. Gleichzeitig mit dem Aushärten der Tinte wird auch die Oberfläche der Druckbahn trocken und grifffest. Die Druckbahnen können dabei als vereinzelte Druckbögen oder als sogenannte endlose Druckbahnen von einer Rolle dem Drucker zugeführt werden. Die fertig bedruckte Druckbahn, d.h. das Druckerzeugnis kann anschliessend weiterverarbeitet, gestapelt oder bei endlosen Druckbahnen bspw. wieder auf eine Aufnahmerolle aufgewickelt werden. Das Aushärten, hier synonym zu Durchhärten oder (Aus)Polymerisieren verwendet, findet dabei unmittelbar nach dem Bedrucken statt, um ein Verwischen bei der weiteren Verarbeitung oder einen sogenannten Abklatsch der bedruckten Vorderseite auf der unbedruckten Rückseite des Druckerzeugnisses beim Stapeln oder Aufrollen desselben zu verhindern. Dazu wird das frisch bedruckte Druckerzeugnis mit einer UV-Lampe bestrahlt. Um die UV-Aushärtung in Durchlaufanlagen in der benötigten kurzer Zeit sicher zu stellen, sind entsprechend hohe UV-Bestrahlungsleistungen notwendig, die das Druckerzeugnis auch thermisch belasten. Zwar konnte hier durch Einsatz von LED-UV-Strahlern, und Luftkühlung der Oberfläche des bestrahlten Druckerzeugnisses die thermische Belastung durch den starken langwelligen Bereich herkömmlicher UV-Strahler herabgesetzt werden, jedoch ist auch damit die Belastung bspw. für dünne und/oder thermisch empfindliche Kunststofffolien häufig zu hoch, wodurch es zu Verzug, Faltenbildung oder sogar Aufschmelzen oder Entflammen der Druckbahn kommen kann. Diese Situation wird zusätzlich durch die bei der Polymerisation von Acrylattinten frei werdende exotherme Reaktionsenthalpie verschärft.

Aus der WO 96/34700 A1 ist es bekannt, eine UV-Aushärtekammer zum Aushärten und Trocknen eines mit zumindest einem UV-härtenden Farbstoff bedruckten flachen Druckerzeugnisses mit Inertgas zu befüllen und gleichzeitig das Substrat auf einem gekühlten Gegendruckzylinder zu temperieren.

Ziel der vorliegenden Erfindung ist es unter anderem die oben beschriebenen Nachteile des Standes der Technik zu beseitigen und ein Verfahren sowie eine Aushärtekammer und einen mit einer entsprechenden Aushärtekammer betriebenen Drucker zur Verfügung zu stellen mit dem auch dünne mit UV-Tinte bedruckte Kunststoffsubstrate, insbesondere Kunststofffolien, bspw. aus Polyethylen (PE) oder Polyvinylchlorid (PVC), bedruckt und in Durchlaufanlagen, auch bei hohen Durchlaufgeschwindigkeiten ausgehärtet werden können.

### Offenbarung und Ausführungsformen

Eine erfindungsgemässe Aushärtekammer zum Aushärten und Trocknen eines mit zumindest einem UV-härtenden Farbstoff bedruckten flachen Druckerzeugnisses, umfasst dabei
- eine erste Kammerwand die eine Kühlfläche umfasst oder eine Kühlfläche ist,
- eine zweite Kammerwand, die der ersten Kammerwand gegenüberliegt, wobei an oder in der zweiten Kammerwand zumindest eine auf die Kühlfläche gerichtete UV-Lampe angeordnet ist,
- dritte und vierte sich gegenüberliegend, zwischen erster und zweiter Kammerwand angeordnete Kammerwände die einen Einführschlitz, bzw. einen Ausführschlitz umfassen und den entsprechenden Schlitz zur ersten Kammerwand hin bilden,
- fünfte und sechste sich gegenüberliegende, zwischen erster und zweiter Kammerwand angeordnete Seitenwände,
wobei an oder in der Nähe der dritten bzw. vierten Kammerwand jeweils ein Kühlgaseinlass, bzw. ein Gasauslass angeordnet ist und der Kühlgaseinlass ein Inertgas-Einlass ist, der zumindest eine flache Düse, oder eine entsprechende lineare Düsenanordnung mit einer Austrittsebene IG des Kühlgases umfasst, die in Transportrichtung parallel oder im spitzen Winkel so gegen die Kühlfläche gerichtet ist, dass auch Gegenwirbel zur Transportrichtung T gebildet werden oder eine zweite Düsenreihe vorgesehen ist, die gegen die Transportrichtung T gerichtet ist. kann die Inertgaszufuhr nicht nur die Aushärtung der UV-härtenden Tinte auf der Oberfläche des Druckerzeugnisses beschleunigen sondern zusätzlich die von der Kühlfläche abgewandte bedruckte Vorderseite des Druckerzeugnisses kühlen.

Grundsätzlich können hier bspw. Ar oder auch Ne, He, Xe oder CO₂ verwendet werden, besonders gute Ergebnisse bezüglich der Trockenleistung wurden allerdings überraschenderweise mit Stickstoff erzielt. Die Inertgaszufuhr kann dabei also zumindest eine Ar- oder auch Ne-, He-, Xe oder CO₂-Zufuhr, dabei aber insbesondere eine Stickstoffzufuhr umfassen oder eine entsprechende Gaszufuhr sein. Diese kann auch bspw. zumindest einen Druckgasbehälter mit entsprechendem Gasvorrat, bspw. Ar oder/und Stickstoff umfassen. Die Kühlfläche dient dabei zum Kühlen eines ersten Bereichs einer ersten Seite (Rückseite) des flachen, im Wesentlichen zweidimensionalen Druckerzeugnisses, während die UV-Lampe zum Bestrahlen eines zweiten Bereichs auf einer zweiten Seite (Vorderseite) des Druckerzeugnisses dient, wobei sich der erste und zweite Bereich bezüglich ihrer x,y-Projektionen in der Ebene des Druckerzeugnisses zumindest teilweise so überlappen, dass die Projektion des ersten Bereich den zweiten Bereich umfasst. Das Druckerzeugnis liegt damit zumindest im bestrahlten Bereich an der Kühlfläche an, bzw. wird an der Kühlfläche anliegend geführt. Die Aushärtekammer ist somit über der ersten Seite des Druckerzeugnisses, zumindest über den bestrahlten und auf der Rückseite gekühlten Bereich als Kammer ausgebildet.

Dabei kann der Kühlgas-Einlass an oder in der Nähe einer bezüglich einer Transportrichtung des Druckerzeugnisses entgegengesetzten Kammerbegrenzung angebracht sein wie der Gasauslass. Beispielsweise der Einlass an der bezüglich der Transportrichtung T vorderen 3. Kammerwand, der Auslass an der bezüglich der Transportrichtung T hinteren 4. Kammerwand oder umgekehrt. Der Inertgasstrom kann gleichsinnig zur Transportrichtung geführt werden, wenn der Kühlgas-Einlass bspw. an oder in der Nähe der Druckerzeugniss-Eingangsseite der Kammer vorgesehen wird oder entgegengesetzt zur Transportrichtung, wenn der Inertgas-Einlass bspw. an oder in der Nähe der Druckerzeugniss-Ausgangsseite vorgesehen ist. Der Gasauslass ist dann jeweils an oder in der Nähe der jeweils entgegengesetzten Eingangs-/ Ausgangsseite. In einer Ausführungsform wird der Kühlgas-Einlass in der Nähe oder an der bezüglich der Transportrichtung T des Druckerzeugnisses vorderen 3. Kammerwand angebracht, der Gasauslass an der entsprechenden hinteren vierten Kammerwand.

Die Kühlfläche kann dabei die Oberfläche einer zumindest in die Transportrichtung drehbaren Kühlwalze sein. Dabei kann die Kühlwalze entweder durch das an der Kühlfläche, d.h. an einem Teilbereich des Walzenumfangs anliegende Druckerzeugnis mitgedreht werden oder mit einem Antrieb, der die Kühlfläche mit der gleichen (Umfangs)Geschwindigkeit wie das daran entlang geführte Druckerzeugnis bewegt, versehen sein. Der Antrieb kann dabei über einen Zentralantrieb, bspw. eines mit der Aushärtekammer über Transmissionsriemen oder Getriebe verbundenen Drucksystems, oder über einen separaten, bspw. mit einem auf eine eingestellte Durchlaufgeschwindigkeit des Druckers synchronisierbaren Antrieb erfolgen.

Der Kühlgas-Einlass kann zumindest eine flache Düse, oder eine entsprechende lineare Düsenanordnung, mit einer bezüglich der Längsabmessung der Düsenöffnung, bzw. Düsenanordnung parallelen Ausrichtung zur Transportebene und einer parallelen oder im spitzen Winkel gegen die Transportebene, insbesondere gegen die Kühlfläche gerichteten Austrittsebene IG des Kühlgases umfassen. Unter Austrittsebene wird hier die (Haupt)Austrittsebene des aus der Düse flächig austretenden Kühlgases verstanden. Um eine entsprechende Führung des Kühlgasstroms zu erreichen wird dabei die Düse selbst oder ein bezüglich einer Kühlgasströmung unmittelbar vor der Düsenöffnung angeordneter und mit dieser verbundener Strömungskörper bspw. zunächst parallel und/oder sich im letzten Abschnitt gegen die Düsenöffnung verjüngend ausgebildet. Damit kann die Düse bzw. der Strömungskörper mit der Düse bezüglich der Austrittsebene parallel oder im spitzen Winkel gegen die Kühlfläche, dabei insbesondere parallel oder im spitzen Winkel in oder alternativ gegen die Transportrichtung gerichtet werden. Damit wird auch der Kühl-, bzw. Inertgasstrom parallel oder im spitzen Winkel gegen die Kühlfläche bzw. Transportrichtung gerichtet. Ein solcher Kühlgaseinlass kann besonders effektiv in Form eines sogenannten Air Knifes, oft auch Luftklinge, Luftmesser oder Luftschwert genannt, als präzisionsgefertigte Luftdüse, bspw. aus Aluminium oder Edelstahl ausgeführt sein, womit ein einheitlich scharfer Luftvorhang gebildet werden kann, der ideal für Trocknungs- und Kühlprozesse ist. Der Winkel der Austrittsebene IG kann dabei zwischen 30 und 60°, bspw. zwischen 40 bis 50° liegen. Zusätzlich kann die Austrittsöffnung(en) oder Düse(n), bspw. durch eine Ausnehmung in einer, unter einer oder/und unmittelbar vor, oder/und unmittelbar hinter einer dritten oder vierten Kammerwand, bspw. einer Gaseinlasswand, so ausgebildet sein, dass auch Gegenwirbel zu Transportrichtung T gebildet werden. Alternativ kann auch eine Düse oder Düsenreihe in Transportrichtung T und eine zweite Düsenreihe in entsprechendem spitzen Winkel, bspw. w.o., gegen die Transportrichtung T gerichtet sein. Beide Massnahmen können das unerwünschte Eindringen von Luft, bzw. Luftsauerstoff noch weiter reduzieren. Bei entsprechender Parameterwahl, bspw. Erzeugung eines leichten Überdrucks in der Härtekammer, kann, insbesondere bei Vorsehen einer der oben genannten Massnahmen, auf zusätzliche Spaltdichtungen verzichtet werden.

Die UV-Lampe kann dabei Licht in einem Bereich zwischen 200 nm und 450 nm, oder zwischen 365 nm und 405 nm ausstrahlen und/oder parallel zur Kühlfläche, beispielsweise kreisförmig oder segmentiert kreisförmig, in einem Abstand von 15 mm bis 50 mm, bzw. von 20 mm bis 40 mm Ansprüche dazu angeordnet sein. Die LED-Lampe kann dabei bezüglich ihrer Abstrahlfläche parallel zur Kühlwalze gekrümmt ausgebildet sein, bspw. als kleinflächig segmentierte Arrays. Die Aushärtekammer kann zwei oder mehrere UV-Lampen umfassen, die bezüglich der Transportrichtung oder/und seitlich gegeneinander versetzt angeordnet sind. Dabei kann die UV-Lampe kann eine LED-Lampe oder ein LED-Array sein.

Die Aushärtekammer kann dabei so konstruiert sein, dass die Düse selbst oder ein mit der Düse verbundener Strömungskörper die dritte oder vierte Kammerwand bildet, oder/und die vierte oder dritte Kammerwand einen Gasauslass mit einer grösseren, kleineren oder gleichgrossen freien Gasauslassfläche wie die Gaseinlassfläche der mindestens einenDüse umfasst. Die vierte oder dritte Kammerwand kann grundsätzlich zumindest in Teilbereichen als Lochwand, d.h. Wand mit Löchern oder mit Gitter ausgebildet sein. Alternativ oder ergänzend kann auch der Einführschlitz oder/und der Ausführschlitz entweder allein, gemeinsam oder in Kombination mit anderen Gasauslassflächen, bspw. seitlichen Spalten, den Gasauslass bilden.

Dabei kann die Aushärtekammer Mittel zum Anpressen des Druckerzeugnisses an die Kühlfläche oder/und Mittel zum Führen des Druckerzeugnisses auf der Kühlfläche umfasst. Solche Mittel können auch alternativ oder zusätzlich aussserhalb der Aushärtekammer, im zugehörigen Drucker vorgesehen sein. Die Dimensionen der bestrahlten Kühlfläche können dabei bezüglich der Breite grundsätzlich an die Breite der zu bedruckenden Bahnen bspw. in einem Bereich von 100 bis 2000 mm, oder 150 bis 400 mm gewählt werden. Bezüglich des bestrahlten Bereichs der Kühlfäche in der Transportrichtung des durchlaufenden Druckerzeugnisses hat sich eine Länge von mindestens 2 bis 50 cm, insbesondere auch eine Länge von 5 bis 20 cm als günstig erwiesen.

Die Erfindung umfasst auch einen Drucker mit zumindest einer Druckvorrichtung zum Aufbringen einer UV-härtenden Tinte auf eine Druckbahn mit zumindest einem UV-Tintenvorrat oder einer UV-Tintenzufuhr, wobei der Drucker eine wie oben und in den Ausführungsbeispielen näher beschriebene Aushärtekammer umfasst, die in Transportrichtung T stromabwärts der Druckvorrichtung angeordnet ist.

Dabei kann der Drucker Mittel zum Anpressen des Druckerzeugnisses, an die Kühlfläche oder/und Mittel zum Führen des Druckerzeugnisses auf der Kühlfläche umfassen.

Die Mittel zum Anpressen, die entweder an, bzw. in der Aushärtekammer, dabei stromabwärts der Aushärtestrecke oder auch bspw. nach der Aushärtekammer am Drucker angeordnet sind, können zumindest eine gefederte Walze oder einen drehmomentgesteuerten Antrieb umfassen. Die Führung kann dabei bspw. über eine Bahnkantensteuerung über den Achsenwinkel einer Antriebsrolle erfolgen.

Die Druckvorrichtung kann zumindest einen InkJet-Druckkopf, insbesondere zwei, drei, vier oder mehr InkJet-Druckköpfe umfassen, wobei zwischen zumindest zwei Druckköpfen eine Fixierstation vorgesehen sein kann. Solche Fixierstationen, auch Pinningstation, genannt können für einen Farbe-auf-Farbe- oder/und einen Weissdruck verwendet werden, um ein ineinanderlaufen der Farben zu vermeiden und eine scharfe Abgrenzung zu erzielen. Auch dazu können vorteilhafterweise UV-Fixierlampen, insbesondere UV-LED-Fixierlampen verwendet werden, die allerdings mit wesentlich geringeren Leistungen als die in der Aushärtekammer verwendeten UV-Lampen betrieben werden können, da hier nur eine einzelne und damit dünne Farbschicht gehärtet werden muss und ein vollständiges grifffestes Durchhärten an dieser Stelle noch nicht notwendig ist.

Ein Endlos-Drucker kann dabei eine Vorratsrolle zur Aufnahme einer Druckbahn oder/und eine Aufnahmerolle zur Aufnahme des Druckerzeugnisses, d.h. der bedruckten und dort auch ausgehärteten Druckbahn umfassen. Alternativ kann der Drucker auch als Modul eines Inline-Drucksystems mit durchlaufender Druckbahn ausgebildet sein. Die vorliegende Erfindung umfasst auch ein Verfahren zum Bedrucken einer Druckbahn, wobei die Druckbahn in einer Druckvorrichtung zunächst mittels UV-härtender Tinte, bspw. einer InkJet-Tinte, bedruckt und anschliessend in einer wie oben beschriebenen erfindungsgemässen Aushärtekammer, bzw. in einem wie oben beschriebenen erfindungsgemässen Drucker in der Aushärtekammer unter Inertgas ausgehärtet wird. Dabei wird das Druckerzeugnis durch den Inertagsstrom auch gekühlt und im Vergleich zu einer Luftkühlung schneller getrocknet um das Erzeugen eines Abklatsches oder ein Verkleben der bedruckten Bahn(en), bspw. auf einer Aufnahmerolle sicher zu verhindern.

Als Inertgas kann dabei Ar oder auch Ne, He, Xe oder CO2, insbesondere aber Stickstoff verwendet werden.

Das Verfahren kann ein Endlosdruckverfahren sein bei dem das Druckerzeugnis bei einer Durchlaufgeschwindigkeit von 5 bis 300 m/min oder 7 bis 60 m/min bedruckt A's und ausgehärtet wird. Wobei die untere Grenze für eine Inlineapplikation eines bspw. mit einer Tiefziehmaschine gekoppelten Druckers gilt, der niedrigen Geschwindigkeit solcher Maschinen angepasst betrieben werden muss. Dem hingegen betreffen die oberen Grenzen aktuelle Hoch- und Höchstleistungsdrucker.

Durch die UV-Lampe(en) kann dabei eine Leistung von 1 bis 40 W/cm², oder zwischen 2 bis 20 W/cm² auf die Oberfläche des auf oder an der Kühlfläche geführten Druckerzeugnisses eingebracht werden.

Die Druckbahn kann eine Folie, oder eine Endlosfolie umfassen oder eine Folie, oder eine Endlosfolie sein, wobei die Folie eine Kunststofffolie, eine Folie auf einer Papierbasis, eine Etikettenfolie oder eine Aluminiumfolie sein kann. Beispielsweis kann eine Kunststofffolie aus PVC, PP (Polypropylen) oder Polyethylen, dort insbesondere PP-HD oder PE-HD (bspw. Tyvek® von Dupont, ein Vliesstoff aus Polyethylen hoher Dichte, d.h. PE-HD, der sich aus fibrillierten, eng miteinander zu Netzwerken verbundenen Feinstfilamenten im Durchmesserbereich von 0,5 bis 10 µm aufbaut) hergestellt sein.

Auch dünne Folien mit einer Dicke von 0.5 µm bis 600 µm insbesondere zwischen 10 µm bis 300 µm können bedruckt werden. Eine ausreichende Vernetzung also Aushärtung der UV-Tinten auf derartig dünnen Folien insbesondere Kunststofffolien aus PE ist lediglich auf Grund der mit dem vorliegenden Verfahren niedrigen Bestrahlungsenergien, unter gleichzeitiger Kühlung möglich, ohne dabei die Folie thermisch zu beschädigen. Die Kühlung kann dabei zumindest im bestrahlten Bereich zusätzlich durch ein Führen der Rückseite des Druckerzeugnisses an oder über eine Kühlfläche erfolgen.

Das Bedrucken der Folie erfolgt dabei mit einer UV-härtende Tinte. Diese kann auf Acrylatbasis hergestellt sein. Beispielsweise kann die Tinte Pigment(e) und oder Klarlack, radikalische Photoinitiatoren, Dispergiermittel und gegebenenfalls weiteren Additive umfassen. Dabei können zumindest zwei radikalische Photoinitiatoren vom Norrish Typ 1 und mindestens ein radikalisch härtbares Monomer in Form eines polyfunktionellen alkoxylierten und/oder polyalkoxylierten Acrylatmonomers, welches ein oder mehrere Di- und/oder Tri-Acrylate umfasst, enthalten sein, wobei das Mol-Verhältnis aller Acrylate zu allen Initiatoren etwa 5:1 bis 19:1, insbesondere etwa 7:1 bis 15:1, beträgt. Bezüglich weiterer Details der hier verwendeten Tintenrezepturen sei im Übrigen auf die WO 2011/135089 A1 verwiesen, die bezüglich der hier verwendeten Tinten im ganzen Umfang zu einem integrierten Bestandteil der Erfindung erklärt wird. Zusätzlich sei noch bemerkt, dass auch entsprechende UV-härtende Tinten mit einem Haftvermittler in Form eines Isocyanats in einer Konzentration von 0.1 gew.% bis 20 gew.% oder 0.5 gew.% bis 2.5 gew.% für das Bedrucken verwendet werden können. Beispielhaft werden im Folgenden verschieden Haftvermittler genannt, die sich für den Einsatz mit UV-Tinten im Allgemeinen und für den Einsatz für Drucker mit einer erfindungsgemässen Aushärtekammer im Besonderen eignen:
- Eine 50%-ige Lösung von Poly(Toluol-2,4-Diisocyanate) in Butylacetat, anbei die Formel für das Monomere: 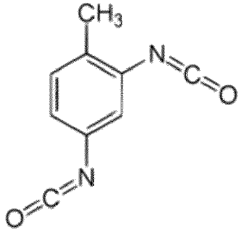
- Hexamethylendiisocyanate mit CAS Number 822-06-0 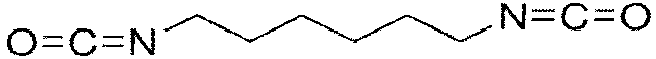
- Poly(hexamethylene-diisocyanate) mit CAS Number 28182-81-2 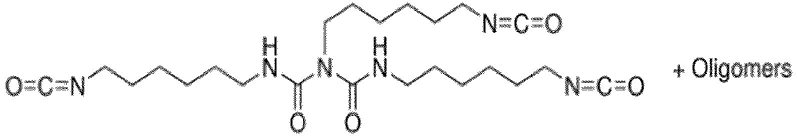
- Poly(propylene-glycol) mit Toluol-2,4-diisocyanat-Endgruppe mit CAS Number 9057-91-4

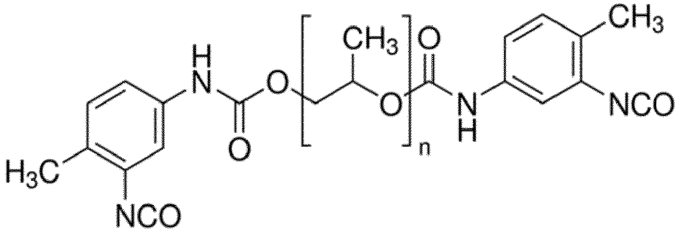

Im Folgenden wird die Erfindung an Hand von Figuren beispielhaft beschrieben. Gleiche Bezugszeichen in unterschiedlichen Figuren haben dieselbe Bedeutung. Alle Zeichnungen sind schematisch und können nicht zur direkten Ableitung von Grössenverhältnissen oder Abmessungen dienen.
Fig.1 Eine Ausführungsform einer erfindungsgemässen Aushärtekammer
Fig.2 Eine weitere Ausführungsform einer erfindungsgemässen Aushärtekammer
Fig.3 Ein Drucker mit einer Aushärtekammer
Fig.4 Polymeristaionsverlauf mit / ohne Inertgas

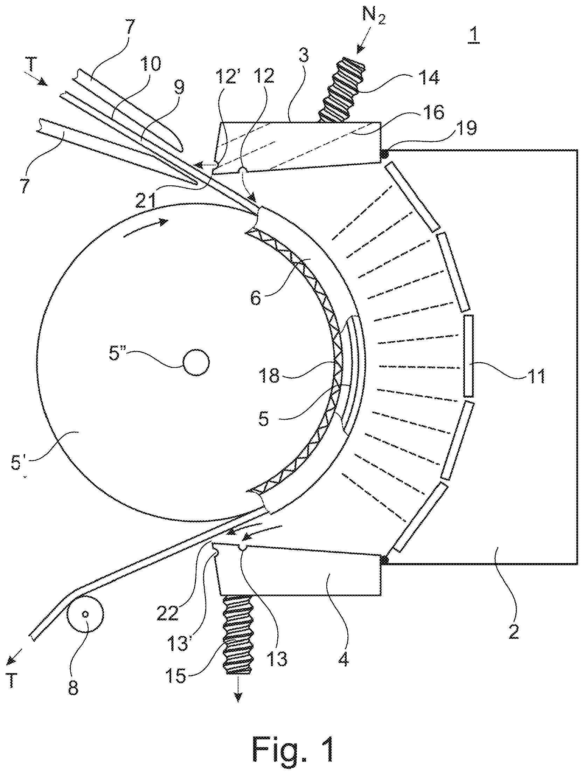

Die in Figur 1 dargestellte Ausführungsform einer erfindungsgemässen Aushärtekammer umfasst eine Kühlwalze 5', die gleichzeitig im Wesentlichen die erste «untere» Kammerwand bildet. Im Folgenden wird, wie auch schon im Vorhergehenden der Begriffe «unten» innerhalb der Aushärtekammer bezüglich eines Bereichs verwendet, der sich von der Ebene des Druckerzeugnisses 9 in Richtung der Kühlfläche 5 bzw. der ersten Kammerwand erstreckt, der Begriff «oben» bezüglich eines Bereichs der sich von der Ebene des Druckerzeugnisses in Richtung der UV-Lampen 11, 11', bzw. der zweiten Kammerwand 2 erstreckt. In der zweiten, gegenüberliegenden oberen Kammerwand 2 befindet sich ein im Wesentlichen (teil)kreisförmig, parallel über der Kühlwalze ausgebildetes aus fünf Segmenten gebildetes Diodenarray 11 das auf die bedruckte Oberfläche 10 des an der Kühlfläche 5 einer, bspw. wassergekühlten Kühlwalze 5' anliegenden Druckerzeugnisses 9 strahlt. Das Druckerzeugnis 9 wird dabei von bzw. an der in die Transportrichtung (entsprechend der Pfeile T an den darstellungstechnisch abgeschnittenen Enden des Druckerzeugnisses) um die Achse 5" drehenden Kühlwalze 5' geführt, bzw. mitgenommen. Seitlich begrenzende Flächen 6, bspw. der einer fünften und sechsten Kammerwand entsprechenden Seitenwände, hier nur in einem kleineren Teilbereich des Trommelumfangs dargestellt, als er zur Abdichtung der Kammer notwendig ist, können gegen die drehende Walze 5' durch eine dynamische Dichtung 18, bspw. eine Labyrinthdichtung oder Bürsten, abgedichtet sein. Die Seitenflächen 6 können dabei an den dritten und vierten, hier nicht näher dargestellten, seitlichen Kammerwänden angebracht oder Bestandteile der entsprechenden Seitenwände sein.

Zusätzliche untere und obere Führungsflächen 7 können den Eintritt des Druckerzeugnisses in den Einführschlitz 21 der Aushärtekammer 1 erleichtern. Durch hier nicht gezeigten Verstellmittel für die Walze 5' kann der Anpressdruck des Druckerzeugnisses, bspw. einer Folie oder eines Etikettenbogens auf die Kühlfläche 5 erhöht werden. Zusätzlich können mehrere, bspw. federnd gegen die bedruckte Oberfläche 9 der auslaufenden Druckbahn angestellt Anpressrollen oder - Walzen 8 als Anpressmittel vorgesehen sein. Letztere, sowie untere und obere Führungsflächen können entweder direkt an der Kammer 1, 1' oder separat am zugehörigen Drucker 23 montiert sein.

Die bezüglich der Transportrichtung T vordere, dritte Kammerwand, wird hier durch den Inertgas-Einlass 3 gebildet, der das durch die Gasleitung 14 einströmende Inertgas, insbesondere Kühlgas, bspw. Stickstoff, durch Strömungsleitmittel wie Strömungsleitbleche 16, 16' im Einlass 3, 3' oder/und Geometrie der Düsen 12 im spitzen Winkel oder parallel zur Oberfläche 10 des Druckerzeugnisses 9 leitet. Die Strömungsrichtung des Kühlgases kann dabei einen sogenannten Kühlgasvorhang mit einer Kühl- oder Inertgasebene IG (senkrecht zur Darstellungsebene) parallel oder im spitzen Winkel zur Transportebene, bzw. Kühlfläche bilden. Gaseinlass 3 weist zwei längliche Düsen 12, 12' oder entsprechend linear angeordnete Düsenreihen 12, 12' mit entsprechend der Pfeile unterschiedlichen Strömungsrichtungen und Eintrittslinien auf. Dabei erzeugt die erste Düse bzw. Düsenreihe 12 in der Kammer 1 einen in Transportebene gerichteten Strömungsvorhang. Dem hingegen erzeugt die zweite Düse bzw. Düsenreihe 12' ausserhalb der Kammer 1, einen gegen die Transportrichtung gerichteten Strömungsvorhang, wodurch bereits vor dem Einführschlitz 3 der Sauerstoffanteil herabgesetzt wird und somit bereits zwischen Folie und dritter Kammerwand, bzw. Einlass 3 einströmendes Leckgas einen geringeren Sauerstoffgehalt aufweist.

Die bezüglich der Transportrichtung T hintere, vierte Kammerwand, wird hier durch den Gasauslass 4 gebildet, durch den das eingeblasene Inertgas abgesaugt und in die Gasableitung 15 geführt wird. Wie in Figur 1 dargestellt kann auch der Auslass 4 zwei Auslassöffnungen 13, 13' insbesondere Auslassschlitze oder entsprechend linear angeordnet Öffnungsreihen umfassen, von denen die eine 13 in der Kammer, die andere 13' ausserhalb der Kammer, hier in unmittelbarer Nähe des Ausführschlitzes 22, angeordnet ist. Dadurch kann ein unerwünschtes Einströmen von Luft durch den Ausführschlitz 22 einerseits durch das mit Überdruck aus der Kammer strömende Inertgas und die zusätzliche äussere Kammerabsaugung 13' andererseits auch ohne zusätzliche Dichtungen verhindert werden. Zwischen Gasauslass 4, 4' bzw. vierter Kammerwand und zweiter Kammerwand 2 kann ebenso eine statische Dichtung 19 angebracht sein, wie zwischen Gaseinlass 3, 3' oder dritter Kammerwand 3" und zweiter Kammerwand 2, sowie zwischen allen anderen einen Teilbereich einer Kammerwand bildende Elementen. Des Weiteren kann ein Sauerstoffsensor 17 in der Kammer 1, 1' angeordnet sein um bspw. eine zu hohe Sauerstoffkonzentration anzuzeigen, bspw. um den Drucker abzuschalten oder über eine Prozesssteuerung den Gaszufluss zu erhöhen.

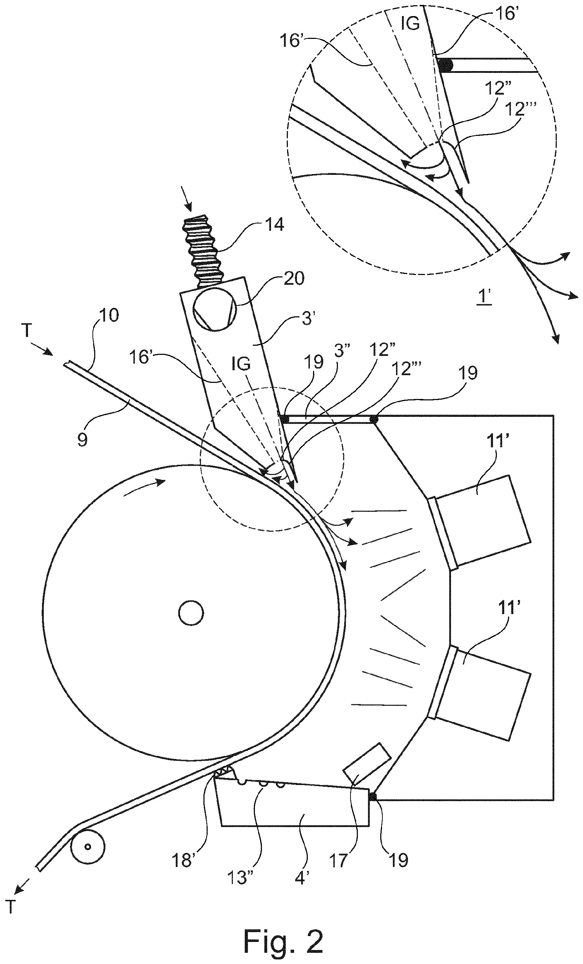

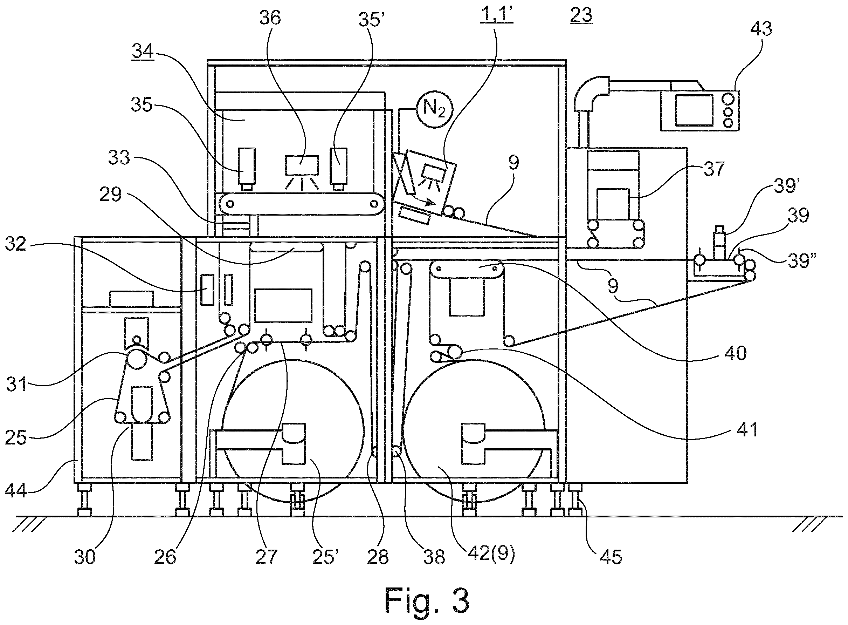

Die in Figur 2 gezeigte Aushärtekammer 1' ist ähnlich der in Figur 1 gezeigten aufgebaut, jedoch ist hier ein Kühlgaseinlass als sogenanntes Luftschwert mit einem Kompressor 20 ausgebildet der lediglich eine längliche Düse oder Düsenanordnung 12" aufweist die einen durch einen Pfeil symbolisierten Luftvorhang in der strichpunktiert dargestellten Inertgasebene IG erzeugt, der durch das auf der Kühlfläche aufliegenden Druckerzeugnis in Transportrichtung T umgeleitet und in der Kammer, wie durch 3 Pfeile angedeutet weiter verwirbelt wird. Durch eine nach der Düse 12" in bzw. an der 3. Kammerwand geformte konkave Eintrittsfläche 12''' wird gleichzeitig ein gegen die Transportrichtung T durch zwei Pfeile dargestellter Inertgaswirbel gebildet, der das Eindringen von Luft in die Aushärtekammer zusätzlich behindert. Im Unterschied zu der in Figur 1 gezeigten Ausführungsform werden hier zwei einzelne bezüglich der Transportrichtung T hintereinander angeordnete LED-Strahler gezeigt. Des Weiteren wird hier das Kühlgas lediglich durch in die Kammer 1' gerichtete Auslassöffnungen 13" abgesaugt, wobei der Ausführschlitz 22 durch eine Bürste 18' gegen Atmosphäre abgedichtet ist. Figur 3 zeigt beispielhaft in stark vereinfachter Weise einen universell einsetzbaren UV-DOD (drop on demand) Label-Drucker 23 mit einer erfindungsgemässen Aushärtekammer 1,1' der in einem auf Nivelierfüssen 45 abgestützten Rahmen 44 montiert ist, an dem sich auch die Ein-/Ausgabeeinheit 43 für den Operateur befindet. Damit können Druckbahnrollen 25' bis zu 600 mm Durchmesser verarbeitet werden.

Im Folgenden werden die einzelnen teils bereits aus dem Stand der Technik bekannten Komponenten des Druckers 23 im Wesentlichen entlang eines teilweise optionalen Flusspfades der Druckbahn 25 (Web) bzw. des Druckerzeugnisses 9, d.h. der bedruckten Druckbahn, beschrieben. Von der Druckbahnrolle 25' wird die Druckbahn 25 von der, bzw. durch die eingangsseitige Druckbahnführung 29 zunächst an einer Station 26 zur Messung der Dicke der Druckbahn vorbei über den Eingangs-Spleisstisch 27 und eingangsseitige Tänzerrollen 28 gezogen. Die Schichtdickenmessung zur automatischen Abschaltung bei fehlerhafter Druckbahn, bspw. zur Feststellung eventueller Falten, Blasen oder Knitter der Etiketten kann dabei durch Auslenkung oder Druck an zwei gegeneinander gestellten Walzen erfolgen. Nach der Druckbahnführung 29 an der auch ein nicht näher dargestelltes Messgerät zur Detektion der Webkante vorgesehen sein kann, folgen drei optionale Module: Eine Reinigungsstation 30 für die Reinigung, bspw. mittels einer Gegenwalze mit klebriger Oberfläche, eine Coronastation 31 zur Vorbehandlung der Druckbahn 25 mittels Coronaentladung, sowie eine Druckbahnheizung 32 deren Temperatur über die Ein-/Ausgabeeinheit 43 eingestellt werden kann. Unmittelbar vor der Druckvorrichtung 34 befindet sich ein Lablekante- und/oder Druckpositionssensor 33 um ein möglichst genaues Druckergebnis zu ermöglichen. Dies kann bspw. durch eine 4-Punktmessung einer vorbedruckten Position oder ähnlichem geschehen.

Die Druckvorrichtung 34 umfasst vier bis zehn Druckköpfe unterschiedlicher Farbe, wobei pro Farbe 1 bis 10 Druccköpfe verwendet werden können, wobei hier beispielhaft UV-Inkjet-Druckköpfe 35,35' für lediglich zwei Farben mit dazwischen angeordneter Fixierstation 36 gezeigt werden. Letztere kann zwischen zwei Druckköpfen bzw. zwei Drucckopfreihen unterschiedlicher Farbe vorgesehen sein um ein Überdrucken der Farben auch bei hohen Druckgeschwindigkeiten ohne Ineinanderlaufen (Bleeding) zu ermöglichen. Auch eine Anordnung zwischen der Druckstation, bzw. dem letzten Druckkopf, oder der letzten Druckkopfreihe und der Aushärtekammer ist zum Erreichen einer vorläufigen Fixierung möglich, bspw. zur Fixierung der obersten Farbschicht. Üblicherweise enthält eine solche Druckvorrichtung, sofern sie universell einsetzbar sein soll Druckköpfe für die Farben Weiss, CMYK, Vollfarben, durchsichtigen Lack sowie die entsprechenden Fixierstationen dazwischen. Die Fixierstation 36 kann ebenfalls mittels einer UV-Lampe die vom ersten Druckkopf 35 gedruckte Tinte härten, wird dabei jedoch mit einer niedrigeren W/cm² Leistung als die UV-Lampe (n) der folgenden Aushärtestation betrieben. Die Aushärtestation kann beispielsweise mit einer ebenen Kühlfläche oder analog den in den Figuren 1 und 2 gezeigten Aushärtekammern 1,1' mit Kühlwalze oder aus einer entsprechenden Mischung verschiedener erfinderischen Merkmalskombinationen aufgebaut sein kann. Anschliessend, vor den Ausgangstänzerrollen 38 und/oder einem ausgangsseitigen Spleisstisch 29, der analog zum eingangsseitigen Spleisstisch 27, zwei Druckbahnhalter 39" sowie einen Kleberollenhalter 39' umfasst, kann noch optional ein optisches Kontrollsystem 37 zur automatischen Prüfung der Druckqualität vorgesehen sein. Nach dem Durchlaufen der Druckerzeugnisführung 40 läuft das Druckerzeugnis 9 über eine Zugkontrolle 41 um die am Druckerzeugnis anliegende Zugspannung richtig einzustellen und zu steuern, bevor die bedruckte Bahn auf der Druckerzeugnisrolle 42 aufgewickelt wird.

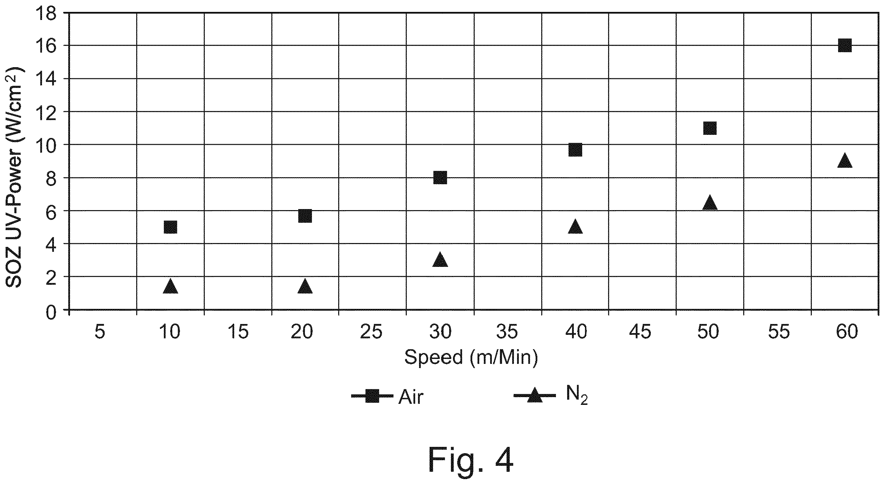

Figur 4 zeigt die Ergebnisse eines Vergleichstests einer erfindungsgemässen Aushärtekammer die mit Stickstoff betrieben wird, sowie die Ergebnisse bei konventionellen Betrieb mit Druckluft. Dabei wurde bei unterschiedlichen Durchlaufgeschwindigkeiten (x-Achse) die sogenannte SOZ (safe operating zone)-Leistung der UV-Lampen pro cm² bestrahlter Fläche ermittelt (y-Achse), bei der eine sichere Durchhärtung nach einem Durchlauf einer bestrahlten zylindrischen Ebene mit einer Länge von beispielsweise 8 bis 20 cm festgestellt werden konnte. Die entsprechenden Zahlenwerte sind in Tabelle 1 aufgelistet. Die SOZ-Leistung entspricht dabei der Leistung die bei der entsprechenden Geschwindigkeit eine solche Durchhärtung (Auspolymerisation) bewirkt, die das Entstehen eines Abklatsches, bspw. auf der Rückseite einer aufgerollten Folie, verhindert. Dabei zeigt sich deutlich, dass für die Härtung unter Stickstoffatmosphäre bei fast allen Durchlaufgeschwindigkeiten eine Leistung (SOZ_{N2}) eingestellt werden kann die höchstens 50% der unter Kühlluft notwendigen Leistung (SOZ_{Air}) entspricht, was für die rasche und schadensfreie Härtung von bedruckten temperaturempfindlichen Kunststofffolien wesentlich ist.

Die Einströmfläche der Düse für Stickstoff betrug im vorliegenden Fall 0.2 mm x 300 mm Um hier nicht die thermische Empfindlichkeit von Kunststofffolien berücksichtigen zu müssen, wurde der Test auf Alufolien b = 260 mm, d = 20 µm durchgeführt, die mit Ascepte Extra Black, einer schwarzen UV-härtenden Acrylattinte mit mehreren Norish I Fotoinitiatoren, flächendeckend vorbedruckt wurden. Druckluft und Stickstoff wurden dabei jeweils mit einem Vordruck von 6 bar über ein Luftschwert am Eingang einer analog Figur 2 ausgebildeten Kammer, mit zwei hintereinander versetzten LED-Lampen, als Luft-, bzw. Stickstoffvorhang in einem Winkel von 45 ° schräg in Transportrichtung auf die bedruckte Oberfläche der durchlaufenden Folie geblasen, wodurch in Kombination mit einer Absaugung ein Überdruck von 0.1 - 20 mbar in der Kammer eingestellt wurde. Der Durchmesser des Kühlzylinders betrug 84 mm, Breite 380 mm der bestrahlte Umfang hatte dabei eine Länge in Transportrichtung von ca. 122 mm, bei einem Umschlingungswinkel von ca. 167°. Grundsätzlich sind für einen solchen Einsatz ganz unterschiedlich dimensionierte Kühlwalzen möglich, jedoch sind Kühlwalzen mit einem Durchmesser von 60 mm bis 200 mm auf Grund der Foliendicke und der bis 200 mm noch gut beherrschbaren Trägheitskräfte vorteilhaft. Bezüglich der Breite der Walze wird sich diese üblicherweise nach der breitesten zu bedruckenden Druckbahn richten. im Übrigen sei auf die obigen Angaben verwiesen. Unmittelbar nach Durchlaufen der Aushärtekammer wurde ein Wattestift (Q-Tips) von Hand angedrückt und über die bedruckte Oberfläche gezogen, wobei die SOZ-UV-Leistung als die niedrigste Leistung bestimmt wurde, bei dem keine Farbe mehr auf das Wattestäbchen übertragen wurde. Die Leistung wurde dabei in von 1.6 Watt/cm² in 1.6 Wattschritten, falls nötig bis auf den Maximalwert von 16 Watt/cm² erhöht.

**Tabelle 1**

| V_{Bahn} | [m/min] | 10 | 20 | 30 | 40 | 50 | 60 |
|---|---|---|---|---|---|---|---|
| SOZ_{Air} | [W/cm² ] | 4.8 | 5.0 | 8.0 | 9.6 | 11.2 | > 16 |
| SOZ_{N2} | [W/cm² ] | < 1.6 | < 1.6 | 3.2 | 4.8 | 6.4 | 8.7 |

Analoge Tests wurden auch mit Ar und Ne als Inertgase durchgeführt. Auch damit konnte die SOZ-UV-Leistung gegenüber einer Luftkühlung deutlich gesenkt werden. Allerdings nicht ganz im selben Umfang wie mit Stickstoff.

### Bezugszeichen

- 1,1': Aushärtekammer
- 2: 2. Kammerwand
- 3,3': IG-Einlass, Luftschwert in/als 3. Kammerwand
- 3": 3. Kammerwand
- 4,4': IG-Auslass, Luftschwert in/als 4. Kammerwand
- 5: Kühlfläche, 1. Kammerwand
- 5': Kühlwalze
- 5": Achse der Kühlwalze
- 6: seitliche Fläche, Abschnitt der Seitenfläche der 5./6. Kammerwand
- 7: Führungsmittel, untere/obere Führungsfläche für Druckerzeugnis
- 8: Anpressmittel, Anpresswalze für Druckerzeugnis
- 9: Druckerzeugnis
- 10: bedruckte Oberfläche des Druckerzeugnisses
- 11: LED-Lampe, LED-Array
- 11': LED-Lampe, LED-Strahler
- 12,12', 12": Düse
- 12''': Eintrittsfläche
- P217176: (EP)
- 13,13',13'': IG-Auslassöffnung
- 14: IG-Zuleitung
- 15: IG-Ableitung
- 16,16': Stömungsleitmittel in IG-Einlass
- 17: Sauerstoffsonde
- 18,18': Dynamische Dichtung, bspw. Labyrinth, Bürste
- 19: Statische Dichtung
- 20: Kompressor
- 21: Einführschlitz
- 22: Ausführschlitz
- 23: Drucker
- 24: Druckvorrichtung
- 25: Druckbahn
- 26: Druckbahndickenmessung
- 27: Eingangstänzerrollen
- 28: Spleisstisch (Eingang)
- 29: Druckbahnführung
- 30: Druckbahnreinigungsstation (opt.)
- 31: Coronastation (opt.)
- 32: Druckbahnheizung (opt.)
- 33: Lablekante &/oder Druckpositionssensor
- 34: Druckvorrichtung
- 35, 35': Inkjetdruckkopf
- 36: Fixierstation
- 37: Optisches Prüfgerät (opt.)
- 38: Ausgangstänzerrollen
- 39: Spleisstisch (Ausgang)
- 40: Druckerzeugnisführung
- 41: Aufwickelzugkontrolle
- 42: Rolle für Druckerzeugnis
- 43: Ein-/Ausgabeeinheit
- 44: Rahmen
- 45: Rahmenfuss

## Patentansprüche

1. Aushärtekammer (1, 1') zum Aushärten und Trocknen eines mit zumindest einem UV-härtenden Farbstoff bedruckten flachen Druckerzeugnisses (9), umfassend
- eine erste Kammerwand (5) die eine Kühlfläche umfasst oder eine Kühlfläche ist,
- eine zweite Kammerwand (2), die der ersten Kammerwand gegenüberliegt, wobei an oder in der zweiten Kammerwand zumindest eine auf die Kühlfläche gerichtete UV-Lampe (11, 11') angeordnet ist,
- dritte und vierte sich gegenüberliegend, zwischen erster und zweiter Kammerwand angeordnete Kammerwände die einen Einführschlitz (21), bzw. einen Ausführschlitz (22) umfassen und den entsprechenden Schlitz zur ersten Kammerwand (5) hin bilden,
- fünfte und sechste sich gegenüberliegende, zwischen erster und zweiter Kammerwand angeordnete Seitenwände (6),
wobei an oder in der Nähe der dritten bzw. vierten Kammerwand jeweils ein Kühlgaseinlass (3, 3') bzw. ein Gasauslass (4, 4') angeordnet ist und der Kühlgaseinlass ein Inertgas-Einlass ist, der zumindest eine flache Düse (12, 12''), oder eine entsprechende lineare Düsenanordnung (12, 12'') mit einer Austrittsebene (IG) des Kühlgases umfasst, die in Transportrichtung (T) parallel oder im spitzen Winkel so gegen die Kühlfläche (5) gerichtet ist, dass auch Gegenwirbel zur Transportrichtung (T) gebildet werden oder eine zweite Düsenreihe (12') vorgesehen ist, die gegen die Transportrichtung (T) gerichtet ist.

2. Aushärtekammer nach Anspruch 1, **dadurch gekennzeichnet, dass** der Kühlgaseinlass an oder in der Nähe einer bezüglich einer Transportrichtung entgegengesetzten Kammerbegrenzung angebracht ist wie der Gasauslass.

3. Aushärtekammer nach einem der vorhergehenden Ansprüche, **dadurch gekennzeichnet, dass** die Inertgaszufuhr zumindest eine Ar, Ne, He oder/und Xe, CO₂ insbesondere aber eine Stickstoffzufuhr (N₂) umfasst oder ist.

4. Aushärtekammer nach einem der vorhergehenden Ansprüche, **dadurch gekennzeichnet, dass** der Kühlgaseinlass an oder in der Nähe einer bezüglich einer Transportrichtung (T) vorderen Kammerwand angebracht ist.

5. Aushärtekammer nach einem der vorhergehenden Ansprüche, **dadurch gekennzeichnet, dass** die Kühlfläche die Oberfläche einer drehbaren Kühlwalze (5') ist.

6. Aushärtekammer nach einem der vorhergehenden Ansprüche, **dadurch gekennzeichnet, dass** der Kühlgaseinlass zumindest eine flache Düse, oder eine entsprechende lineare Düsenanordnung, mit einer bezüglich der Längsabmessung der Düsenöffnung oder Düsenanordnung parallelen Ausrichtung zur Transportebene und einer parallelen oder im spitzen Winkel gegen die Transportebene, insbesondere gegen die Kühlfläche gerichteten Austrittsebene (IG) des Inertgases umfasst.

7. Aushärtekammer nach einem der vorhergehenden Ansprüche, **dadurch gekennzeichnet, dass** die UV-Lampe Licht in einem Bereich zwischen 200 nm und 450 nm, oder zwischen 365 nm und 405 nm ausstrahlt.

8. Aushärtekammer nach einem der vorhergehenden Ansprüche, **dadurch gekennzeichnet, dass** die UV-Lampe parallel zur Kühlfläche und in einem Abstand von 5 mm bis 50 mm, bzw. von 10 mm bis 40 mm dazu angeordnet ist.

9. Aushärtekammer nach einem der vorhergehenden Ansprüche, **dadurch gekennzeichnet, dass** die Aushärtekammer zwei oder mehrere UV-Lampen umfasst, die bezüglich der Transportrichtung oder/und seitlich gegeneinander versetzt angeordnet sind.

10. Aushärtekammer nach einem der vorhergehenden Ansprüche, **dadurch gekennzeichnet, dass** die UV-Lampe eine LED oder ein LED-Array umfasst oder ist.

11. Aushärtekammer nach einem der vorhergehenden Ansprüche, **dadurch gekennzeichnet, dass** die Aushärtekammer Mittel zum Anpressen des Druckerzeugnisses an die Kühlfläche oder/und Mittel zum Führen des Druckerzeugnisses auf der Kühlfläche umfasst.

12. Drucker (23) mit zumindest einer Druckvorrichtung (34) zum Aufbringen einer UV-härtenden Tinte auf eine Druckbahn (25) mit zumindest einem UV-Tintenvorrat oder einer UV-Tintenzufuhr, **dadurch gekennzeichnet, dass** er eine Aushärtekammer (1, 1') nach einem der vorhergehenden Ansprüchen umfasst, die stromabwärts der Druckvorrichtung (34) angeordnet ist.

13. Drucker nach Anspruch 12, **dadurch gekennzeichnet, dass** er Mittel zum Anpressen des Druckerzeugnisses, an die Kühlfläche umfasst.

14. Drucker nach Anspruch 12 in Verbindung mit Anspruch 11 oder nach Anspruch 13, **dadurch gekennzeichnet, dass** die Mittel zum Anpressen zumindest eine gefederte Walze umfassen.

15. Drucker nach einem der Ansprüche 13 bis 14, **dadurch gekennzeichnet, dass** die Druckvorrichtung zumindest einen InkJet-Druckkopf umfasst.

16. Drucker nach Anspruch 15, **dadurch gekennzeichnet, dass** die Druckvorrichtung zwei, drei, vier oder mehr InkJet-Druckköpfe unterschiedlicher Tinte umfasst.

17. Drucker nach Anspruch 16, **dadurch gekennzeichnet, dass** zwischen zumindest zwei Druckköpfen unterschiedlicher Tinte oder/und zwischen dem letzten Druckkopf und der Aushärtekammer eine Fixierstation angeordnet ist.

18. Drucker nach einem der Ansprüche 13 bis 16, **dadurch gekennzeichnet, dass** der Drucker eine Vorratsrolle zur Aufnahme einer Druckbahn oder/und eine Aufnahmerolle zur Aufnahme des Druckerzeugnisses umfasst.

19. Drucker nach einem der Ansprüche 13 bis 16, **dadurch gekennzeichnet, dass** der Drucker als Modul eines Inline-Drucksystems mit durchlaufender Druckbahn ausgebildet ist.

20. Verfahren zum Bedrucken einer Druckbahn (25), wobei die Druckbahn in einer Druckvorrichtung (34) zunächst mittels UV-härtender Tinte bedruckt und anschliessend in einer Aushärtekammer (1, 1') nach einem der Ansprüche 1 bis 11 unter Inertgas ausgehärtet wird.

21. Verfahren nach Anspruch 20, **dadurch gekennzeichnet, dass** das Inertgas Ar oder auch Ne, He, Xe oder CO₂, insbesondere aber Stickstoff ist.

22. Verfahren nach einem der Ansprüche 20 und 21, **dadurch gekennzeichnet, dass** das Verfahren in einem Drucker nach einem der Ansprüche 12 bis 19 durchgeführt wird.

23. Verfahren nach einem der Ansprüche 20 bis 22, **dadurch gekennzeichnet, dass** das Verfahren ein Endlosdruckverfahren ist und das Druckerzeugnis bei einer Durchlaufgeschwindigkeit von 5 bis 300 m/min oder 7 bis 60 m/min bedruckt und ausgehärtet wird

24. Verfahren nach Anspruch 23, **dadurch gekennzeichnet, dass** durch die UV-Lampe(en) eine Leistung von 1 bis 40 W/cm², oder zwischen 2 bis 20 W/cm² auf die Oberfläche des auf oder an der Kühlfläche geführten Druckerzeugnisses eingebracht wird.

25. Verfahren nach einem der Ansprüche 20 bis 24, **dadurch gekennzeichnet, dass** die Druckbahn eine Folie, oder eine Endlosfolie umfasst.

26. Verfahren nach Anspruch 25, **dadurch gekennzeichnet, dass** die Folie eine Kunststofffolie, eine Folie auf einer Papierbasis, eine Etikettenfolie oder eine Aluminiumfolie ist.

27. Verfahren nach einem der Ansprüche 25 oder 26, **dadurch gekennzeichnet, dass** die Folie oder Endlosfolie ein Dicke von 0.5 µm bis 600 µm insbesondere zwischen 10 µm bis 300 µm aufweist.

28. Verfahren nach einem der Ansprüche 20 bis 27, **dadurch gekennzeichnet, dass** die UV-härtende Tinte eine Acrylatbasis mit einem Gehalt an Pigment(en) oder/und Klarlack, radikalischen Photoinitiatoren, Dispergiermittel(n) und gegebenenfalls weiteren Additiven umfasst, wobei mindestens zwei radikalische Photoinitiatoren vom Norrish Typ 1 und mindestens ein radikalisch härtbares Monomer in Form eines polyfunktionellen alkoxylierten und/oder polyalkoxylierten Acrylatmonomers, das ein oder mehrere Di- und/oder Tri-Acrylate umfasst, enthält, wobei das Mol-Verhältnis aller Acrylate zu allen Initiatoren etwa 5:1 bis 19:1, insbesondere etwa 7:1 bis 15:1, beträgt, enthalten sind.

29. Verfahren nach Anspruch 28, **dadurch gekennzeichnet, dass** die UV-härtende Tinte einen Haftvermittler in Form eines Isocyanats in einer Konzentration von 0.1 gew.% bis 20 gew.% oder 0.5 gew.% bis 2.5 gew.% enthält.

## Claims

1. A Curing chamber (1, 1') for curing and drying a flat printed product (9) printed with at least one UV-curing dye, comprising
- a first chamber wall (5) which comprises a cooling surface or is a cooling surface,
- a second chamber wall, which is opposite to the first chamber wall, with at least one UV lamp (11, 11') directed towards the cooling surface being arranged on or in the second chamber wall,
- third and fourth chamber walls arranged opposite to one another, and between the first and second chamber walls, which comprise an insertion slot (21) or an output slot (22) and form the corresponding slot towards the first chamber wall (5),
- fifth and sixth opposite side walls (6) arranged between the first and second chamber wall,
wherein a cooling gas inlet (3, 3') or a gas outlet (4, 4') is arranged on or near the third or fourth chamber wall and the cooling gas inlet is an inert gas inlet which comprises at least a flat nozzle (12, 12''), or a corresponding linear nozzle arrangement (12, 12'') with an exit plane (IG) of the cooling gas, which is directed in the transport direction (T) in parallel or at an acute angle against the cooling surface (5), so that also counter-vortices are formed to the transport direction (T), or a second row of nozzles (12') is provided, which is directed against the transport direction (T).

2. The curing chamber according to claim 1, **characterized in that** the cooling gas inlet is attached at or near a chamber boundary opposite to the gas outlet with respect to a transport direction.

3. The curing chamber according to one of the preceding claims, **characterized in that** the inert gas supply comprises or is at least one Ar, Ne, He and/or Xe, CO₂ but in particular a nitrogen (N₂) supply.

4. The curing chamber according to one of the preceding claims, **characterized in that** the cooling gas inlet is mounted on or in the vicinity of a front chamber wall with respect to a transport direction (T).

5. The curing chamber according to one of the preceding claims, **characterized in that** the cooling surface is the surface of a rotatable cooling roll (5').

6. The curing chamber according to one of the preceding claims, **characterized in that** the cooling gas inlet has at least one flat nozzle, or a corresponding linear nozzle arrangement, with an orientation in parallel to the transport plane with respect to the longitudinal dimension of the nozzle opening or nozzle arrangement, and an exit plane (IG) of the inert gas being directed in parallel to or at an acute angle to the transport plane, and in particular towards the cooling surface.

7. The curing chamber according to one of the preceding claims, **characterized in that** the UV lamp emits light in a range between 200 nm and 450 nm, or between 365 nm and 405 nm.

8. The curing chamber according to one of the preceding claims, **characterized in that** the UV lamp is arranged parallel to the cooling surface and at a distance of 5 mm to 50 mm, or 10 mm to 40 mm therefrom.

9. The curing chamber according to one of the preceding claims, **characterized in that** the curing chamber comprises two or more UV lamps which are arranged offset relative to the transport direction and/or laterally relative to one another.

10. The curing chamber according to one of the preceding claims, **characterized in that** the UV lamp comprises or is an LED or an LED array.

11. The curing chamber according to one of the preceding claims, **characterized in that** the curing chamber comprises means for pressing the printer product against the cooling surface and/or means for guiding the printing product on the cooling surface.

12. A printer (23) with at least one printing device (34) for applying a UV-curing ink to a printing web (25) with at least one UV ink supply or a UV ink supply, **characterized in that** it has a curing chamber (1, 1') according to one of the preceding claims, which is arranged downstream of the printing device (34).

13. The printer according to claim 12, **characterized in that** it comprises means for pressing the printer product onto the cooling surface.

14. The printer according to claim 12 in connection with claim 11 or according to claim 13, **characterized in that** the means for pressing comprise at least one resilient roller.

15. The printer according to one of claims 13 to 14, **characterized in that** the printing device comprises at least one inkjet print head.

16. The printer according to claim 15, **characterized in that** the printing device comprises two, three, four or more inkjet print heads of different inks.

17. The printer according to claim 16, **characterized in that** a fixing station is arranged between at least two print heads of different ink and/or between the last print head and the curing chamber.

18. The printer according to one of claims 13 to 16, **characterized in that** the printer comprises a supply roll for receiving a print web and/or a receiving roll to receive the printed product.

19. The printer according to one of claims 13 to 16, **characterized in that** the printer is designed as a module of an inline printing system with a continuous printing path.

20. A method for printing a print web (25), wherein the print web is first printed in a printing device (34) using UV-curing ink and is then cured in a curing chamber (1, 1') according to one of claims 1 to 11 in an inert gas atmosphere.

21. The method according to claim 20, **characterized in that** the inert gas is Ar or also Ne, He, Xe or CO₂, but in particular nitrogen.

22. The method according to any one of claims 20 and 21, **characterized in that** the method is carried out in a printer according to any one of claims 12 to 19.

23. The method according to any one of claims 20 to 22, **characterized in that** the method is a continuous printing process and the printed product is printed and cured at a throughput speed of 5 to 300 m/min or 7 to 60 m/min.

24. The method according to claim 23, **characterized in that** a power of 1 to 40 W/cm², or between 2 to 20 W/cm², is applied to the surface of the printed product which is guided on or at the cooling surface by the UV lamp (s).

25. The method according to any one of claims 20 to 24, **characterized in that** the printing web comprises a film or an endless film.

26. The method according to claim 25, **characterized in that** the foil is a plastic foil, a foil on a paper basis, a label foil or an aluminum foil.

27. The method according to any one of claims 25 or 26, **characterized in that** the film or continuous film has a thickness of 0.5 µm to 600 µm, in particular between 10 µm to 300 µm.

28. The method according to any one of claims 20 to 27, **characterized in that** the UV-curing ink comprises an acrylate base with a content of pigment(s) and/or clear lacquer, radical photoinitiators, dispersant(s) and optionally further additives, whereat at least two radical photoinitiators of the Norrish type 1 and at least one radical curable monomer in the form of a polyfunctional alkoxylated and/or polyalkoxylated acrylate monomer, comprising one or more di- and/or tri-acrylates are included, whereat the molar ratio of all acrylates to all initiators is about 5:1 to 19:1, in particular about 7:1 to 15:1.

29. The method according to claim 28, **characterized in that** the UV-curing ink contains an adhesion promoter in the form of an isocyanate in a concentration of 0.1% by weight to 20% by weight, or 0.5% by weight to 2.5% by weight.

## Revendications

1. Chambre de durcissement (1, 1') pour faire durcir et sécher un produit imprimé (9) plat imprimé avec au moins un colorant durcissant aux UV, comprenant
- une première paroi de chambre (5) qui comprend une surface de refroidissement ou qui est une surface de refroidissement,
- une deuxième paroi de chambre (2) opposée à la première paroi de chambre, au moins une lampe UV (11, 11') orientée sur la surface de refroidissement étant agencée sur ou dans la deuxième paroi de chambre,
- une troisième et une quatrième paroi de chambre opposées l'une à l'autre et agencées entre la première et la deuxième paroi de chambre, comprenant une fente d'introduction (21) et une fente de sortie (22), et formant la fente correspondante par rapport à la première paroi de chambre (5),
- une cinquième et une sixième parois latérales (6) opposées et agencées entre la première et la deuxième paroi de chambre, une entrée de gaz de refroidissement (3, 3') et une sortie de gaz (4, 4') étant agencées au niveau de ou à proximité de la troisième et de la quatrième paroi de chambre, et l'entrée de gaz de refroidissement étant une admission de gaz inerte, laquelle comprend au moins une buse plate (12, 12") ou un agencement de buse linéaire correspondant (12, 12") avec un plan de sortie (IG) du gaz de refroidissement, laquelle buse est orientée dans le sens de transport (T) parallèlement ou à angle aigu par rapport à la surface de refroidissement (5), de sorte qu'il se forme un contre-tourbillon par rapport au sens de transport (T), ou bien dans lequel il est prévu une deuxième série de buses (12') qui est orientée dans le sens inverse au sens de transport (T).

2. Chambre de durcissement selon la revendication 1, **caractérisée en ce que** l'entrée de gaz de refroidissement est installée au niveau de ou à proximité d'une limite de chambre opposée au sens de transport, tout comme la sortie de gaz.

3. Chambre de durcissement selon l'une des revendications précédentes, **caractérisée en ce que** l'alimentation en gaz inerte comprend ou est au moins une alimentation en gaz Ar, Ne, He et/ou Xe, CO₂, en particulier toutefois une alimentation en azote (N₂).

4. Chambre de durcissement selon l'une des revendications précédentes, **caractérisée en ce que** l'entrée de gaz de refroidissement est montée au niveau de ou à proximité d'une paroi de chambre avant par rapport au sens de transport (T).

5. Chambre de durcissement selon l'une des revendications précédentes, **caractérisée en ce que** la surface de refroidissement est la surface d'un rouleau de refroidissement (5') rotatif.

6. Chambre de durcissement selon l'une des revendications précédentes, **caractérisée en ce que** l'entrée de gaz de refroidissement comprend au moins une buse plate, ou un agencement de buse linéaire correspondant, avec une orientation parallèle au plan de transport en ce qui concerne la dimension longitudinale de l'ouverture de buse ou de l'agencement de buse, et un angle parallèle ou aigu contre le plan de transport, en particulier contre le plan de sortie (IG) du gaz inerte dirigé vers la surface de refroidissement.

7. Chambre de durcissement selon l'une des revendications précédentes, **caractérisée en ce que** la lampe UV émet de la lumière dans une plage comprise entre 200 nm et 450 nm, ou entre 365 nm et 405 nm.

8. Chambre de durcissement selon l'une des revendications précédentes, **caractérisée en ce que** la lampe UV est agencée de façon parallèle à la surface de refroidissement et à une distance allant de 5 mm à 50 mm, respectivement de 10 mm à 40 mm par rapport à cette dernière.

9. Chambre de durcissement selon l'une des revendications précédentes, **caractérisée en ce que** la chambre de durcissement comprend deux lampes UV ou plus qui sont agencées de manière décalée les unes par rapport aux autres par rapport au sens de transport et/ou de manière décalée latéralement.

10. Chambre de durcissement selon l'une des revendications précédentes, **caractérisée en ce que** la lampe UV comprend ou est une LED ou une rangée de LED.

11. Chambre de durcissement selon l'une des revendications précédentes, **caractérisée en ce qu'**elle comprend des moyens pour presser le produit imprimé sur la surface de refroidissement et/ou des moyens pour guider le produit imprimé sur la surface de refroidissement.

12. Imprimante (23) comprenant au moins un dispositif d'impression (34) pour appliquer une encre durcissant aux UV sur une bande d'impression (25) avec au moins une réserve d'encre UV ou une alimentation en encre UV, **caractérisée en ce qu'**elle comprend une chambre de durcissement (1, 1') selon l'une des revendications précédentes, laquelle est agencée en aval du dispositif d'impression (34).

13. Imprimante selon la revendication 12, **caractérisée en ce qu'**elle comprend des moyens pour venir appuyer le produit imprimé sur la surface de refroidissement.

14. Imprimante selon la revendication 12 en liaison avec la revendication 11 ou selon la revendication 13, **caractérisée en ce que** les moyens pour appuyer comprennent au moins un rouleau à ressort.

15. Imprimante selon l'une des revendications 13 à 14, **caractérisée en ce que** le dispositif d'impression comprend au moins une tête d'impression à jet d'encre.

16. Imprimante selon la revendication 15, **caractérisée en ce que** le dispositif d'impression comprend deux, trois, quatre têtes d'impression à jet d'encre ou plus d'encre différente.

17. Imprimante selon la revendication 16, **caractérisée en ce qu'**il est agencé une station de fixation entre au moins deux têtes d'impression d'encre différente et/ou entre la dernière tête d'impression et la chambre de durcissement.

18. Imprimante selon l'une des revendications 13 à 16, **caractérisée en ce qu'**elle comprend une bobine de réserve destinée à recevoir une bande d'impression et/ou une bobine réceptrice destinée à recevoir le produit imprimé.

19. Imprimante selon l'une des revendications 13 à 16, **caractérisée en ce qu'**elle est réalisée comme module d'un système d'impression en ligne avec une bande d'impression continue.

20. Procédé pour imprimer une bande d'impression (25), dans lequel la bande d'impression est d'abord imprimée dans un dispositif d'impression (34) à l'aide d'une encre durcissant aux UV et est ensuite durcie dans une chambre de durcissement (1, 1') selon l'une des revendications 1 à 11 sous gaz inerte.

21. Procédé selon la revendication 20, **caractérisé en ce que** le gaz inerte est de l'Ar ou également du Ne, He, Xe ou CO₂, en particulier toutefois de l'azote.

22. Procédé selon l'une des revendications 20 et 21, **caractérisé en ce que** le procédé est effectué dans une imprimante selon l'une des revendications 12 à 19.

23. Procédé selon l'une des revendications 20 à 22, **caractérisé en ce que** le procédé est un procédé d'impression continue et **en ce que** le produit imprimé est imprimé et durci à une vitesse de débit allant de 5 à 300 m/min ou de 7 à 60 m/min.

24. Procédé selon la revendication 23, **caractérisé en ce que** la/les lampe(s) UV émettent une puissance de 1 à 40 W/cm², ou de 2 à 20 W/cm² sur la surface du produit imprimé guidé sur la surface de refroidissement.

25. Procédé selon l'une des revendications 20 à 24, **caractérisé en ce que** la bande d'impression comprend un film ou un film continu.

26. Procédé selon la revendication 25, **caractérisé en ce que** le film est un film plastique, un film sur une base papier, un film pour étiquette ou un film d'aluminium.

27. Procédé selon l'une des revendications 25 ou 26, **caractérisé en ce que** le film ou film continu présente une épaisseur comprise entre 0,5 µm et 600 µm, en particulier entre 10 µm et 300 µm.

28. Procédé selon l'une des revendications 20 à 27, **caractérisé en ce que** l'encre durcissant aux UV comprend une base acrylate avec une teneur en pigment(s) et/ou vernis incolore, photo-initiateurs radicalaires, agent(s) de dispersion et autres additifs le cas échéant, l'encre contenant au moins deux photo-initiateurs radicalaires de type Norrish 1 et au moins un monomère durcissable de manière radicalaire sous la forme d'un monomère acrylate alcoxylé et/ou polyalcoxylé polyfonctionnel qui comprend un ou plusieurs di- et/ou tri-acrylates, le rapport en moles de tous les acrylates par rapport à tous les initiateurs étant d'environ 5:1 à 19:1, en particulier d'environ 7:1 à 15:1.

29. Procédé selon la revendication 28, **caractérisé en ce que** l'encre durcissant aux UV contient un agent adhésif sous la forme d'un isocyanate dans une concentration de 0,1 % en poids à 20 % en poids, ou de 0,5 % en poids à 2,5 % en poids.
